# FASCICULE DE BREVET EUROPEEN

(11) **EP 3 644 437 B1**
(45) Date de publication et mention de la délivrance du brevet: **05.03.2025**
(21) Numéro de dépôt: 19204419.6
(22) Date de dépôt: 21.10.2019
(51) Int. Cl.: H01Q 1/24, H01Q 9/42, H01Q 5/328

(54) **ANTENNE POUR DISPOSITIF MOBILE DE COMMUNICATION**
ANTENNE FÜR MOBILE KOMMUNIKATIONSVORRICHTUNG
ANTENNA FOR MOBILE COMMUNICATION DEVICE

(30) Priorité: 22.10.2018 FR 1871258
(43) Date de publication de la demande: 29.04.2020
(73) Titulaire: STMicroelectronics (Tours) SAS, 37100 Tours (FR)
(72) Inventeur: BONNET, Benoit, 37100 Tours (FR)
(74) Mandataire: Cabinet Beaumont

(56) Documents cités:
- WO-A1-2017/107451
- WO-A1-2018/176279
- CN-A- 107 317 113
- US-A1- 2014 266 922
- US-A1- 2018 083 344

## Description

### Domaine technique

La présente description concerne de façon générale les dispositifs électroniques et, plus particulièrement, les antennes utilisées par des circuits de transmission équipant des dispositifs mobiles de communication. La présente description vise plus particulièrement une antenne de type quart d'onde court-circuitée (antenne PIFA - Planar Inverted-F Antenna) pour un équipement portatif de télécommunication de type téléphonie mobile (smartphone ou autre).

### Technique antérieure

Une antenne de téléphone mobile est généralement disposée au niveau du boîtier ou coque du téléphone afin de ne pas être écrantée par des éléments métalliques. L'antenne est alors reliée aux circuits électroniques de transmission internes au téléphone.

La multiplication des bandes de fréquences utilisables dans les téléphones mobiles et tablettes ainsi que la multiplication des connecteurs filaires (casque audio, port USB, etc.) présents sur le téléphone conduit à prévoir des antennes large bande et ajustables en fréquence.

Le document US2018/0083344 décrit une antenne ayant une structure de commutation symétrique.

Le document US2014/0266922 décrit une antenne réglable à élément parasite.

Le document CN 107317113 décrit un module d'antenne et un équipement électronique.

### Résumé de l'invention

Il serait souhaitable de disposer d'une architecture d'antenne radiofréquence qui puisse fonctionner efficacement dans différentes bandes de fréquences.

Il serait souhaitable de disposer d'une solution particulièrement adaptée aux bandes de fréquences utilisées dans des dispositifs mobiles de télécommunication.

Il serait souhaitable de disposer d'une solution adaptable aux circuits de transmission existants.

Un mode de réalisation pallie tout ou partie des inconvénients des antennes pour dispositifs mobiles de communication connues.

Un mode de réalisation prévoit une antenne plus particulièrement adaptée à des dispositifs intégrant des ports de connexion filaire, par exemple de type USB.

Ainsi, un mode de réalisation prévoit une antenne comportant :
une bande conductrice allongée ;
au moins un élément capacitif de capacité réglable reliant ladite bande à la masse ; et
au moins un élément inductif commutable en parallèle avec le premier élément capacitif,
la connexion entre l'élément capacitif et le ou les éléments inductifs ne transitant pas par une portion de la bande conductrice.

Selon un mode de réalisation, l'antenne comporte au moins deux éléments inductifs commutables individuellement en parallèle avec l'élément capacitif.

Selon un mode de réalisation, l'antenne comporte un interrupteur commandable en série avec ledit ou chaque élément inductif.

Selon un mode de réalisation, deux interrupteurs respectivement associés à deux éléments inductifs sont commandables selon quatre états :
les deux interrupteurs sont ouverts ;
un premier des interrupteurs est fermé, le deuxième interrupteur étant ouvert ;
le deuxième interrupteur est fermé, le premier interrupteur étant ouvert ; et
les deux interrupteurs sont fermés.

Selon un mode de réalisation, la connexion entre l'élément capacitif et le ou les éléments inductifs est directe.

Selon un mode de réalisation, la valeur d'inductance du ou de chaque élément inductif est d'au moins 5 nH, de préférence, d'au moins 10 nH.

Selon un mode de réalisation, l'antenne constitue une antenne quart d'onde court-circuitée.

Selon un mode de réalisation, l'antenne est dimensionnée pour des bandes passantes dans la plage comprise entre environ 610 MHz et environ 960 MHz.

Un mode de réalisation prévoit un dispositif portable de télécommunication comportant au moins une antenne.

Selon un mode de réalisation, le dispositif comporte un connecteur USB dans une ouverture de la bande conductrice.

Selon un mode de réalisation, le dispositif comporte un connecteur Jack dans une ouverture de la bande conductrice.

Selon un mode de réalisation, la commutation de la ou des éléments inductifs dépend de l'utilisation ou non du ou des connecteurs USB.

Un mode de réalisation prévoit un procédé de commande d'une antenne.

Selon un mode de réalisation, le procédé comporte une étape de commutation du ou des éléments inductifs en fonction de l'activation d'un constituant du dispositif, indépendant de l'antenne.

Selon un mode de réalisation, le procédé comporte en outre une étape de réglage de la capacité de l'élément capacitif en fonction de l'activation d'un constituant du dispositif, indépendant de l'antenne.

Selon un mode de réalisation, le procédé comporte en outre une étape de réglage de la capacité de l'élément capacitif et/ou une étape de commutation du ou des éléments inductifs en fonction de la bande de fréquences souhaitée pour l'antenne.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma-bloc d'un exemple de chaine de transmission radiofréquence du type auquel s'appliquent les modes de réalisation qui vont être décrits ;
la figure 2 représente schématiquement une antenne quart d'onde court-circuitée ;
la figure 3 représente schématiquement une autre antenne quart d'onde court-circuitée ;
la figure 4 représente schématiquement un mode de réalisation d'une antenne PIFA ;
la figure 5 représente schématiquement un autre mode de réalisation d'une antenne PIFA ;
la figure 6 représente schématiquement une antenne PIFA telle que représentée en figure 4 dans un exemple d'environnement ;
la figure 7 est un schéma-bloc partiel d'une structure de réglage d'une antenne PIFA ;
la figure 8 illustre un exemple de réponse en fréquence d'une antenne PIFA telle que représentée en figure 6 ; et
la figure 9 illustre un autre exemple de réponse en fréquence d'une antenne PIFA telle que représentée en figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement et la structure de l'ensemble d'une chaîne de transmission radiofréquence n'ont pas été détaillés, les modes de réalisation décrits étant compatibles avec les chaines de transmission usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

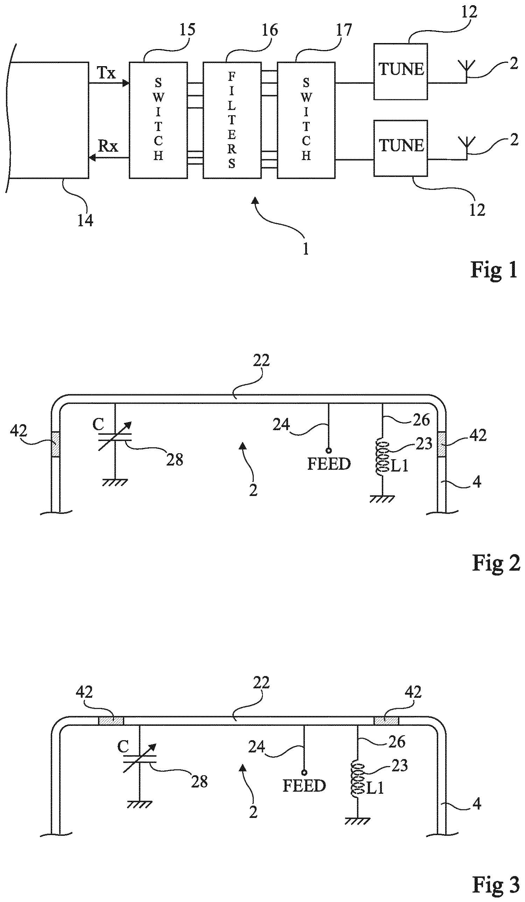

La figure 1 est un schéma-bloc d'un exemple de chaine 1 de transmission radiofréquence du type auquel s'appliquent les modes de réalisation qui vont être décrits.

Une telle chaîne est, dans les applications visées par la présente description, multifréquences en émission et en réception. Une ou (le plus souvent) plusieurs antennes 2 sont connectées individuellement à des circuits 12 de réglage en fréquence (TUNE).

En émission, des signaux Tx à émettre sont générés par des circuits électroniques 14 et sont fournis par un ou plusieurs amplificateurs de puissance (PA - Power Amplifier) à un réseau de commutateurs 15 (SWITCH), dont le rôle est d'aiguiller les signaux vers un filtre d'un réseau de filtres 16 (FILTERS) en fonction de la bande de fréquences considérée. Les sorties (en émission) des filtres 16 sont reliées à un réseau de commutateurs d'antenne 17 (SWITCH) chargé de sélectionner la sortie du filtre utilisé et de la relier au circuit 12 de réglage d'une antenne 2.

En réception, les signaux reçus Rx effectuent un trajet similaire mais inverse, depuis le circuit 12 de l'antenne 2 captant les signaux dans la bande de fréquences appropriée, à travers le réseau de commutateurs 17 pour être filtrés par un des filtres du réseau 16, puis aiguillés par le réseau de commutateurs 15 vers un amplificateur de réception, généralement un amplificateur à faible bruit (LNA - Low Noise Amplifier) du circuit 14.

La figure 2 représente schématiquement une antenne quart d'onde court-circuitée.

La figure 3 représente schématiquement une autre antenne quart d'onde court-circuitée.

Les figures 2 et 3 sont des représentations schématiques d'antennes quart d'onde court-circuitées, également appelées antennes en F inversé (Inverted-F Antenna) qui sont plus particulièrement visées par les modes de réalisation décrits. En effet, ce type d'antennes est celui généralement utilisé dans les téléphones mobiles (smartphones) et tablettes. Plus précisément, les antennes préférentiellement visées sont les antennes PIFA (Planar Inverted-F Antenna) qui sont formées à partir d'un plan conducteur, souvent sous la forme d'une bande plane conductrice 22, plaquée en face interne ou constituant une portion d'une région périphérique d'une coque 4 du téléphone. Dans le dernier cas, la bande conductrice 22 est alors isolée du reste de la coque 4 par des portions 42 de cette dernière, électriquement isolantes.

Les figures 2 et 3 illustrent des exemples d'antennes 2 formées sur un petit côté de la périphérie de la coque 4 d'un téléphone. On suppose le cas d'un téléphone de forme générale rectangulaire. Ces figures schématisent des vues en coupe d'une partie de coque 4 de téléphone.

La figure 2 illustre le cas d'une antenne 2 dont la longueur nécessite qu'elle dépasse du petit côté. L'antenne 2 s'étend donc partiellement sur les bords latéraux de la coque 4.

La figure 3 illustre le cas d'une antenne 2 dont la longueur est telle qu'elle est intégralement contenue dans le petit côté de la périphérie de la coque 4.

Une antenne PIFA comporte au moins :
- une bande conductrice allongée 22 ;
- une prise d'antenne 24 (FEED) destinée à être connectée aux circuits du téléphone (en réception ou en émission), par exemple à un circuit 12 ou directement au réseau 17 de la figure 1 ; et
- une connexion 26 à la masse (directe ou par l'intermédiaire d'un élément inductif 23 représenté en pointillés) .

La prise 24 et la connexion 26 sont disposées dans un même côté de la bande 22, typiquement dans une même moitié de la bande 22. La connexion 26 est soit directe et équivalente à un élément inductif parasite 23, soit via un élément inductif 23 d'inductance L1 reliant la bande 22 à la masse.

Dans les antennes PIFA visées par la présente description, qui sont des antennes multibandes, l'antenne 2 comporte en outre un élément capacitif 28 de capacité C réglable (PTIC - Parascan Tunable Integrated Capacitor) reliant la bande 22 à la masse. La connexion de l'élément capacitif 28 à la bande 22 est située dans l'autre moitié de la longueur de la bande 22 par rapport à celle recevant la prise 24 et la connexion 26. La prise 24 peut être d'un côté ou de l'autre de la connexion 26 par rapport à l'élément 28. L'élément capacitif 28 est commandé par les circuits 14 (figure 1) en fonction de la bande ou des bandes de fréquences de fonctionnement souhaitées.

Pour une antenne, la bande passante se définit pour un taux d'ondes stationnaires (Voltage Standing Wave Ratio - VSWR) de 3, ce qui équivaut à des pertes en réflexion (Return Loss - RL) de 6 dB. En d'autres termes, cela correspond à la bande de fréquences dans laquelle au moins 75% de la puissance est transmise à l'antenne.

Les positions respectives de la connexion 26 et de l'élément capacitif 28 ainsi que les valeurs respectives de l'inductance L1 et de la capacité C conditionnent la fréquence de résonance de l'antenne 2, autrement fixée par la taille de la bande 22. De façon simplifiée, sans élément capacitif et avec la connexion 26 à l'extrémité de la bande 22, la somme de la longueur et de la largeur d'une bande 22 rectangulaire correspond au quart (λ/4) de la longueur d'onde. L'élément capacitif 28 permet de réduire la taille de la bande 22. Toujours de façon simplifiée, la position de la prise 24 par rapport à l'extrémité de la bande 22 conditionne le coefficient de réflexion de l'antenne 2. En pratique, le concepteur de l'antenne 2 effectue de nombreuses simulations pour déterminer les positions et valeurs respectives des connexions 24 et 26 et de l'élément 28.

Avec les bandes de fréquences utilisées dans la téléphonie mobile, des antennes telles qu'illustrées aux figures 2 et 3 ne permettent pas d'obtenir une largeur de bande passante suffisante pour couvrir à la fois les basses fréquences et les hautes fréquences des normes de télécommunication mobile.

Typiquement, pour couvrir les bandes de fréquences des normes 4G, voire 5G, on est conduit à élargir la bande de fréquences de fonctionnement de l'antenne vers les hautes fréquences (de 2,17 GHz pour la 3G à 2,7 GHz pour la 4G, puis à 3 GHz ou plus pour la 5G). De plus, pour la 4G, on souhaite disposer d'une bande passante descendant jusqu'à environ 700 MHz et pour la 5G, d'une bande passante descendant à moins de 500 MHz.

Par ailleurs, on souhaite désormais que les téléphones soient capables de capter ou couvrir plusieurs bandes de fréquences simultanément (carrier aggregation) afin de pouvoir augmenter la bande passante et les débits de communication de données. Cela est en particulier vrai pour les normes 4G et 5G.

Pour obtenir une antenne large bande, on a déjà proposé dans les documents US-A-2018205137 ou EP-A-3352301 (16-TO-0705/17-TO-0006 - B15743/B15776) d'adjoindre un élément inductif à proximité de l'élément capacitif 28 de capacité variable. D'après les réalisations proposées dans ces documents, un élément inductif relie, à proximité de l'élément capacitif 28, la bande 22 à la masse. Par proximité, on entend que la distance entre les points de raccordement respectifs de l'élément inductif et de l'élément 28 à la bande 22 est inférieure à la distance entre le point de raccordement de l'élément inductif et la connexion à la masse 26.

Une antenne PIFA peut cependant se retrouver à proximité de connecteurs externes du téléphone, par exemple une prise casque, une prise d'alimentation, une prise USB, mini USB, micro USB, USB-OTG (On-The-Go), etc. La présence d'une telle connexion peut perturber le fonctionnement radiofréquence. En particulier lorsque cette connexion est utilisée, cela modifie le taux d'ondes stationnaires de l'antenne et le décale vers des fréquences plus basses. Les bandes passantes souhaitées ne sont alors plus respectées, en particulier pour des fréquences inférieures au GHz.

Les modes de réalisation décrits ci-après proposent de nouvelles architectures d'antennes visant, non seulement, à améliorer la bande passante à taille de bande conductrice donnée, imposée par les contraintes de la coque 4 du téléphone ou, plus généralement, par l'espace disponible pour l'antenne 2, mais également à permettre une compensation selon qu'un connecteur externe, par exemple un port ou connecteur USB/OTG, est ou non utilisé.

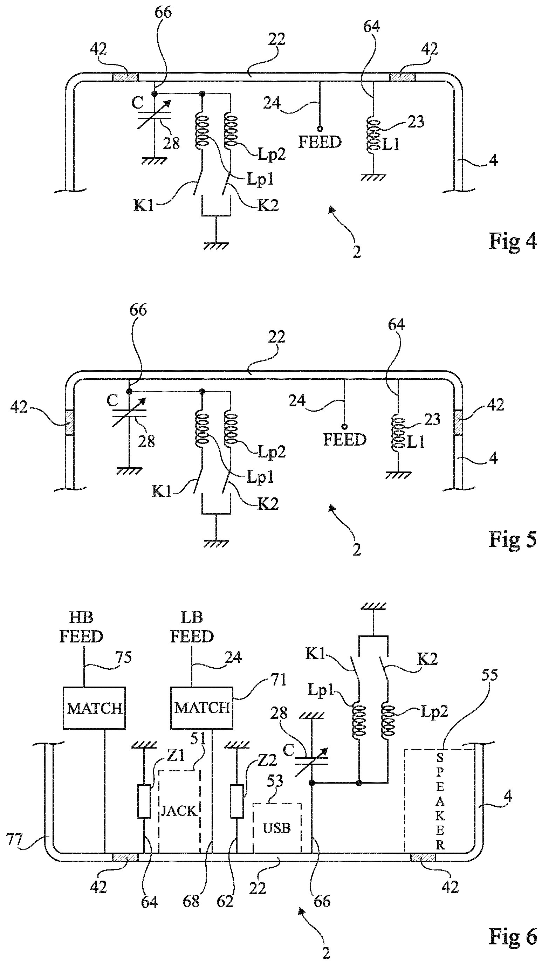

La figure 4 représente schématiquement un mode de réalisation d'une antenne PIFA.

La figure 5 représente schématiquement un autre mode de réalisation d'une antenne PIFA.

Les figures 4 et 5 représentent des modes de réalisation d'une antenne 2 formée sur un petit côté de la périphérie de la coque 4 d'un téléphone. Ces figures sont à rapprocher des figures 2 et 3 et considèrent également le cas d'un téléphone de forme générale rectangulaire. Toutefois, tout ce qui va être décrit s'applique plus généralement à toute antenne PIFA qu'elle soit ou non portée par la périphérie de la coque du téléphone. Les figures 4 et 5 schématisent des vues en coupe d'une partie de coque 4 de téléphone.

La figure 4 illustre le cas d'une antenne 2 dont la longueur est telle qu'elle est intégralement contenue dans le petit côté de la périphérie de la coque 4.

La figure 5 illustre le cas d'une antenne 2 dont la longueur nécessite qu'elle dépasse du petit côté. L'antenne 2 s'étend donc partiellement sur les bords latéraux de la coque 4.

Selon les modes de réalisation décrits, on retrouve la bande conductrice 22, la prise 24 et l'élément capacitif 28 de capacité variable.

Deux éléments inductifs Lp1 et Lp2 sont connectés chacun en série avec un interrupteur K1, respectivement K2, et chaque association en série est connectée en parallèle avec l'élément capacitif 28. Par connexion en parallèle, on entend que les éléments inductifs Lpl et Lp2 sont connectés à l'élément capacitif 28 soit directement soit par l'intermédiaire des interrupteurs K1 et K2, mais sans portion de la bande 22. En d'autres termes, les éléments 28, Lp1 et Lp2 partagent un même point 66 de raccordement à la bande 22.

Le rôle des éléments inductifs Lp1 et Lp2 est d'ajouter une inductance en parallèle avec l'élément capacitif 28. Cette inductance permet d'améliorer la plage de variation de l'élément capacitif réglable 28, et ainsi d'élargir la bande passante vers les basses fréquences, tout en facilitant l'ajustement et le choix des basses fréquences.

De plus, grâce à la commutation entre les inductances Lp1 et Lp2, il est désormais possible de compenser des perturbations apportées par l'activation d'un port de type USB ou autre au voisinage de la bande conductrice 22 et, en fonction de la bande de fréquence de fonctionnement souhaitée, ajuster la valeur d'inductance ajoutée en parallèle sur la capacité 28.

De préférence, il n'y a pas de connexion directe de la bande 22 à la masse. En d'autres termes, si l'on prévoit une inductance supplémentaire 23 (L1) reliant la bande 22 à la masse à partir d'un autre point 64 de connexion que le point 66, cette inductance est de valeur L1 supérieure, dans un rapport d'au moins 5, de préférence de l'ordre de 10 fois supérieure, à une inductance parasite apportée par une connexion directe à la masse.

La valeur d'inductance apportée par chaque élément inductif Lp1, Lp2 est supérieure à la valeur de l'inductance L1 (typiquement une inductance parasite ou de faible valeur) apportée par la connexion à la masse. De préférence, la valeur de chaque inductance Lp1, Lp2 est au moins 5 fois supérieure, de préférence de l'ordre de 10 fois supérieure, à la valeur d'une inductance parasite apportée par une connexion directe de la bande 22 à la masse. Par exemple, la valeur de chaque inductance Lp1, Lp2 est d'au moins 5 nH, de préférence d'au moins 10 nH.

Les interrupteurs K1 et K2 sont de préférence des interrupteurs de type série ou SPST (Single Pole, Single Throw). De préférence, les commutateurs K1 et K2 sont ouverts au repos.

Si l'on se réfère à l'orientation des figures 4 et 5, l'antenne PIFA 2 est réalisée dans le petit côté supérieur de la coque 4 du téléphone. Cela peut s'appliquer, par exemple, au cas d'un téléphone comportant des connecteurs externes dans cette partie supérieure. Toutefois, le même type d'antenne peut être réalisé dans la partie inférieure de la coque 4 qui, pour les téléphones (smartphone) récents, comporte généralement l'accès au connecteur/port USB-OTG et à d'autres connecteurs.

La figure 6 représente une vue en coupe schématique d'un autre mode de réalisation d'une antenne PIFA. Cette figure illustre le cas d'une antenne 2 réalisée dans le petit côté inférieur de la coque 4 du téléphone.

A titre d'exemple particulier de réalisation, on suppose le cas d'une antenne 2 réalisée avec une bande 22 du type de celle de la figure 4. Toutefois, ce qui est décrit par la suite s'applique également à une bande du type de celle de la figure 5, voire à des bandes disposées dans d'autres parties du téléphone.

On retrouve, outre la bande conductrice 22, la prise 24, et l'élément capacitif 28. On retrouve également les éléments inductifs commutables Lp1 et Lp2 ici également au nombre de deux.

Dans l'exemple de la figure 6, on suppose la présence d'une impédance Z1, constituée par exemple essentiellement du composant inductif 23, reliant le point 64 de la bande 22 à la masse. On suppose également la présence d'une autre impédance Z2 reliant la bande 22 à la masse depuis un autre point 62 et constituée de préférence majoritairement d'une inductance. La position de la connexion 62 de l'impédance Z2 à la bande 22 est située entre les points 64 et 66, de connexion de l'inductance Z1 et de l'élément 28 (et des inductances Lp1 et Lp2) à la bande 22.

La figure 6 illustre la présence, dans le téléphone, d'un connecteur 51 (JACK) de type Jack, par exemple pour des écouteurs, d'un connecteur 53 (USB) de type USB ou USB-OTG, et d'un haut-parleur 55 (SPEAKER). Ces connecteurs débouchent dans des ouvertures (non représentées) de la partie inférieure de la coque 4, c'est-à-dire au niveau de la bande 22. Par exemple, le connecteur 53 est approximativement au milieu du côté inférieur de la coque, le connecteur 51 est plus vers la gauche et le connecteur 55 est plus vers la droite.

De préférence, le point 66 de connexion de l'association en parallèle de l'élément capacitif 28 et des inductances Lp1 et Lp2 est situé entre les connecteurs 53 et 55. Par ailleurs, les points 62 et 64 de connexion des impédances Z2 et Z1 sont situés de part et d'autre du connecteur 51, le point 62 étant entre les connecteurs 51 et 53.

En pratique la bande 22 comporte des ouvertures d'accès aux connecteurs.

A titre d'exemple particulier de réalisation, dans les applications à la téléphonie mobile, avec une bande conductrice 22 d'une longueur de l'ordre de 5 à 10 centimètres, la valeur des inductances Lp1 et Lp2 est de l'ordre de la dizaine de nanohenrys à quelques dizaines de nanohenrys. L'ordre de grandeur de la valeur de la capacité C de l'élément capacitif 28 est le picofarad. Une telle antenne permet de descendre la bande basse à environ 600 MHz, voire moins.

La figure 6 illustre également la présence, entre la prise 24 (entre son point 68 de connexion à la bande 22) et les circuits de traitement du téléphone, d'un réseau 71 d'adaptation d'impédance (MATCH). La figure 6 illustre également la présence, non seulement d'une prise 24 de connexion à la bande 22, plus particulièrement destinée aux bandes basses fréquences (LB FEED), mais également d'une prise 73, destinée à des bandes de fréquences plus élevée (HB FEED), reliée par un réseau 75 d'adaptation d'impédance (MATCH), à une autre antenne PIFA 77, portée par la coque 4, par exemple dans la partie gauche de celle-ci. La fonction de cette antenne est alors de couvrir d'autres fréquences, par exemple plus élevées, par exemple de 1,7 GHz à 3 GHz.

A titre d'exemple particulier de réalisation, les bandes basses fréquences vont d'environ 400 MHz à environ 1 GHz et les bandes hautes fréquences sont les bandes de fréquences supérieures, par exemple jusqu'à environ 3 GHz.

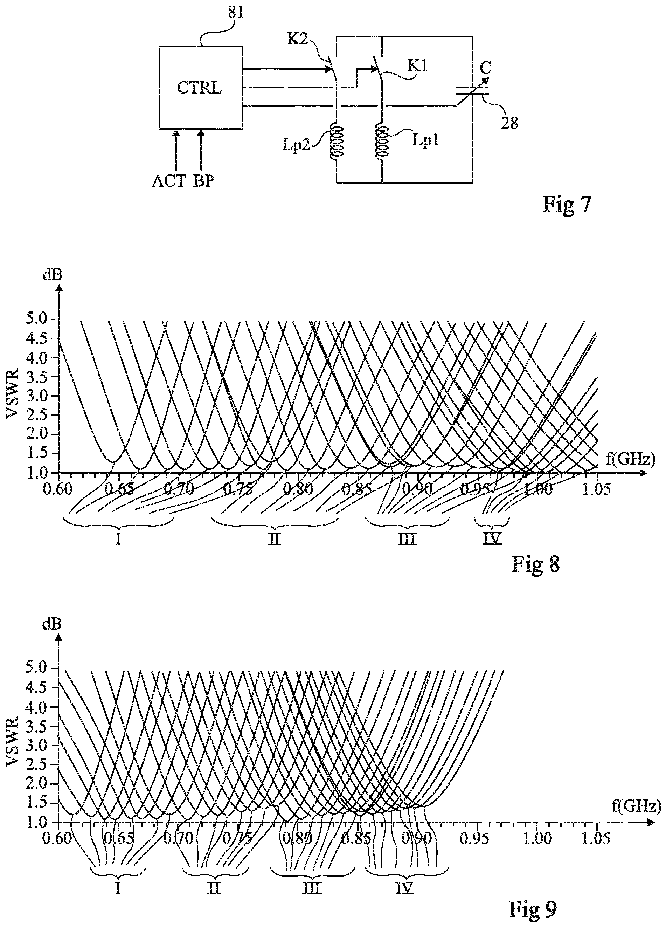

La figure 7 est un schéma-bloc partiel d'un exemple de structure de réglage d'une antenne PIFA.

La figure 7 représente, de façon très schématique, un mode de réalisation selon lequel un circuit 81 (CTRL), par exemple intégré au circuit 14 (figure 1), reçoit non seulement une information BP sur la bande de fréquences utilisée, mais également une information ACT sur le ou les connecteurs actifs. Ces informations sont connues du circuit 14 et sont donc aisément utilisables pour le circuit 81. Le circuit 81 commande non seulement la valeur de l'élément capacitif 28 mais également, individuellement, les interrupteurs K1 et K2 pour mettre si besoin l'inductance Lp1 et/ou l'inductance Lp2 dans le circuit en parallèle avec l'élément 28. La commande des interrupteurs K1 et K2 est en tout ou rien (numérique) tandis que la commande de l'élément capacitif 28 est de préférence analogique.

La figure 8 illustre un exemple de réponse en fréquence d'une antenne PIFA telle que représentée en figure 6.

La figure 9 illustre un autre exemple de réponse en fréquence d'une antenne PIFA telle que représentée en figure 6.

Les figures 8 et 9 représentent des exemples d'allure du taux d'ondes stationnaires VSWR de l'antenne 2 de la figure 6 en fonction de la fréquence, respectivement en l'absence d'utilisation du port USB-OTG et en présence d'une connexion à ce port USB-OTG. Dans l'exemple des figures 8 et 9, on se préoccupe du fonctionnement de l'antenne 2 pour des fréquences comprises entre 610 MHz et 960 MHz (zone grisée aux figures 8 et 9).

Les exemples des figures 8 et 9 correspondent à des mesures obtenues pour une antenne 2 ayant les caractéristiques suivantes :
longueur de bande 22 : environ 4,7 cm ;
capacité de l'élément 28 : environ 1,5 pF ;
inductance Lp1 : environ 36 nH ;
inductance Lp2 : environ 15 nH.

Les réponses tracées aux figures 8 et 9 pour les différentes fréquences sont réparties en quatre catégories selon la configuration des interrupteurs K1 et K2 :
I : les deux interrupteurs sont ouverts et aucune des inductances Lp1 et Lp2 n'est donc insérée dans le montage ;
II : seul l'interrupteur K1 est fermé et l'inductance Lp1 de 36 nH est donc insérée dans le montage ;
III : seul l'interrupteur K2 est fermé et l'inductance Lp2 de 15 nH est donc insérée dans le montage ; et
IV : les deux interrupteurs K1 et K2 sont fermés et les inductances Lp1 et Lp2 en parallèle (de valeur équivalente d'environ 10 nH) sont insérées dans le montage.

Comme l'illustrent les figures 8 et 9, l'insertion de la ou des inductances Lp1 ou Lp2 permet d'élargir la bande de fréquence de fonctionnement acceptable, c'est-à-dire avec un taux d'ondes stationnaires inférieur à 3. De plus, que le port USB soit (figure 9) ou non (figure 8) utilisé, la bande de fonctionnement couvre toute la gamme de fréquence allant d'environ 610 MHz à environ 960 MHz.

L'utilisation des éléments inductifs Lp1 et Lp2 permet de limiter la dégradation du taux d'ondes stationnaires engendrée par l'utilisation du port USB, et ainsi de limiter à moins de 5 dB la dégradation de la puissance totale rayonnée (TRP - Total Radiated Power).

De façon similaire à ce qui vient d'être exposé en relation avec l'exemple d'un connecteur USB-OTG, le réseau d'inductances Lp1 et Lp2 peut être utilisé lors de l'utilisation (l'activation) d'autres constituants du téléphone, à proximité de l'antenne comme, par exemple, la prise casque ou Jack, le haut-parleur, un microphone, etc.

L'impact d'une activation des différents ports sur la réponse en fréquence de l'antenne est aisément déterminé lors de la conception à partir d'analyses et simulations.

Un avantage des modes de réalisation décrits est qu'ils permettent de compenser facilement des dégradations du taux d'ondes stationnaire causées par l'activation d'une connexion USB, d'une prise d'écouteur, d'un haut-parleur, etc. Cela permet d'améliorer les performances de l'antenne en termes de puissance totale rayonnée (TRP) en émission et de sensibilité isotrope totale (TIS - Total Isotropic Sensitivity) en réception.

Un autre avantage des modes de réalisation décrits est qu'ils ne requièrent aucune modification de la bande 22 et sont donc compatibles avec les coques de téléphone actuelles. En effet, les composants ajoutés (inductances Lp1 et Lp2 et interrupteurs K1 et K2) peuvent être montés sur la carte électronique portant l'élément capacitif.

Un autre avantage des modes de réalisation décrits est que la correction apportée par les éléments inductifs, combinée à la variation de la capacité C, permet de corriger la réponse de l'antenne, notamment en termes de puissance totale rayonnée et de sensibilité isotrope totale, non seulement par rapport à l'utilisation du connecteur USB, mais également par rapport à d'autres éléments perturbateurs comme, par exemple, le branchement d'un écouteur sur une prise Jack, le fonctionnement du haut-parleur, etc.

Un avantage des modes de réalisation décrit est que la connexion à la bande conductrice, de la capacité variable connectée à la masse, de préférence associée aux inductances commutables également reliées à la masse, s'effectue en un seul et même point de la bande conductrice. Cela simplifie non seulement la fabrication mais en outre améliore les performances de l'antenne, notamment par rapport à une solution dans laquelle ces composants seraient reliés indépendamment à la bande conductrice.

Un autre avantage des modes de réalisation décrits est que grâce à l'utilisation d'une capacité variable connectée à la masse, de préférence associée aux inductances commutables également reliées à la masse, ils évitent le besoin d'une structure symétrique d'application des signaux via des composants fixes commutables.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, le nombre d'inductances en parallèle avec l'élément capacitif 28 peut être différent de 2. Cependant, un nombre de 2 ou 3 éléments constitue un compromis avantageux entre la correction obtenue en fréquence et l'encombrement supplémentaire engendré.

Enfin, la mise en oeuvre pratique des modes de réalisation et variantes décrits est à la portée de l'homme du métier à partir des indications fonctionnelles données cidessus. En particulier, le choix des valeurs des inductances Lp1 et Lp2 et de la plage de variations de la capacité C est à la portée de l'homme du métier en fonction notamment de l'application et des bandes de fréquences considérées.

## Revendications

1. Antenne comportant :
une bande conductrice allongée (22) ;
une prise d'antenne (24) connectée à la bande conductrice (22) ;
au moins un élément capacitif (28) de capacité réglable reliant, à partir d'un premier point (66), ladite bande à la masse ;
au moins un premier élément inductif (23) reliant la bande conductrice (22) à la masse à partir d'un deuxième point (64) ; et
au moins un deuxième élément inductif (Lp1, Lp2) commutable (K1, K2) en parallèle avec le premier élément capacitif (28),
l'élément capacitif (28) et le ou les premiers éléments inductifs (Lp1, Lp2) étant connectés hors de de la bande conductrice (22).

2. Antenne selon la revendication 1, comportant au moins deux premiers éléments inductifs (Lp1, Lp2) commutables individuellement en parallèle avec l'élément capacitif (28).

3. Antenne selon la revendication 2 comportant un interrupteur commandable (K1, K2) en série avec ledit ou chaque premier élément inductif (Lp1, Lp2).

4. Antenne selon les revendications 2 et 3, dans laquelle deux interrupteurs (K1, K2) respectivement associés à deux premiers éléments inductifs (Lp1, Lp2) sont commandables selon quatre états :
les deux interrupteurs (K1, K2) sont ouverts ;
un premier (K1) des interrupteurs est fermé, le deuxième interrupteur (K2) étant ouvert ;
le deuxième interrupteur (K2) est fermé, le premier interrupteur (K1) étant ouvert ; et
les deux interrupteurs (K1, K2) sont fermés.

5. Antenne selon l'une quelconque des revendications 1 à 4, dans laquelle la connexion entre l'élément capacitif (28) et le ou les premiers éléments inductifs (Lp1, Lp2) est directe.

6. Antenne selon l'une quelconque des revendications 1 à 5, dans laquelle la valeur d'inductance du ou de chaque premier élément inductif (Lp1, Lp2) est d'au moins 5 nH, de préférence, d'au moins 10 nH.

7. Antenne (2) selon l'une quelconque des revendications 1 à 6, constituant une antenne quart d'onde court-circuitée.

8. Antenne (2) selon l'une quelconque des revendications 1 à 7, dimensionnée pour des bandes passantes dans la plage comprise entre environ 610 MHz et environ 960 MHz.

9. Dispositif portable de télécommunication comportant au moins une antenne (2) selon l'une quelconque des revendications 1 à 8.

10. Dispositif selon la revendication 9, comportant un connecteur USB (53) dans une ouverture de la bande conductrice (22).

11. Dispositif selon la revendication 9 ou 10, comportant un connecteur Jack (51) dans une ouverture de la bande conductrice (22).

12. Dispositif selon la revendication 10 ou 11, dans lequel la commutation du ou des éléments inductifs (Lp1, Lp2) dépend de l'utilisation ou non du ou des connecteurs USB (51, 53).

13. Procédé de commande d'une antenne d'un dispositif portable selon l'une quelconque des revendications 9 à 12, comportant une étape de commutation du ou des premiers éléments inductifs (Lp1, Lp2) en fonction de l'activation d'un constituant (51, 53, 55) du dispositif, indépendant de l'antenne (2).

14. Procédé selon la revendication 13, comportant en outre une étape de réglage de la capacité de l'élément capacitif (28) en fonction de l'activation d'un constituant (51, 53, 55) du dispositif, indépendant de l'antenne (2).

15. Procédé selon la revendication 13 ou 14, comportant en outre une étape de réglage de la capacité de l'élément capacitif (28) et/ou une étape de commutation du ou des premiers éléments inductifs (Lp1, Lp2) en fonction de la bande de fréquences souhaitée pour l'antenne.

## Patentansprüche

1. Antenne, die Folgendes aufweist:
einen länglichen leitenden Streifen (22);
einen Antennenstecker (24), der mit dem leitenden Streifen (22) verbunden ist;
wenigstens ein kapazitives Element (28) mit einstellbarer Kapazität, das den Streifen von einem ersten Punkt (66) aus mit Masse verbindet;
wenigstens ein erstes induktives Element (23), das den leitenden Streifen (22) von einem zweiten Punkt (64) aus mit Masse verbindet; und
wenigstens ein zweites induktives Element (Lp1, Lp2), das schaltbar ist (K1, K2), parallel zu dem ersten kapazitiven Element (28),
wobei das kapazitive Element (28) und das/die erste(n) induktive(n) Element(e) (Lp1, Lp2) aus einem Teil des leitenden Streifens (22) heraus verbunden sind.

2. Antenne nach Anspruch 1, aufweisend wenigstens zwei einzeln schaltbare erste induktive Elemente (Lp1, Lp2) parallel zu dem kapazitiven Element (28).

3. Antenne nach Anspruch 2, aufweisend einen steuerbaren Schalter (K1, K2) in Reihe mit dem oder jedem ersten induktiven Element (Lp1, Lp2).

4. Antenne nach Anspruch 2 und 3, wobei zwei Schalter (K1, K2), die jeweils zwei ersten induktiven Elementen (Lp1, Lp2) zugeordnet sind, gemäß vier Zuständen steuerbar sind:
die beiden Schalter (K1, K2) sind ausgeschaltet;
ein erster (K1) der Schalter ist eingeschaltet, der zweite Schalter (K2) ist ausgeschaltet;
der zweite Schalter (K2) ist eingeschaltet, der erste Schalter (K1) ist ausgeschaltet; und
die beiden Schalter (K1, K2) sind eingeschaltet.

5. Antenne nach einem der Ansprüche 1 bis 4, wobei die Verbindung zwischen dem kapazitiven Element (28) und dem/den ersten induktiven Element(en) (Lp1, Lp2) direkt ist.

6. Antenne nach einem der Ansprüche 1 bis 5, wobei der Induktivitätswert des oder jedes ersten induktiven Elements (Lp1, Lp2) wenigstens 5 nH, vorzugsweise wenigstens 10 nH, beträgt.

7. Antenne (2) nach einem der Ansprüche 1 bis 6, die eine verkürzte Viertelwellenantenne bildet.

8. Antenne (2) nach einem der Ansprüche 1 bis 7, die für Bandbreiten im Bereich von etwa 610 MHz bis etwa 960 MHz ausgelegt ist.

9. Tragbares Telekommunikationsgerät mit wenigstens einer Antenne (2) nach einem der Ansprüche 1 bis 8.

10. Gerät nach Anspruch 9, aufweisend einen USB-Anschluss (53) in einer Öffnung des leitenden Streifens (22).

11. Gerät nach Anspruch 9 oder 10, aufweisend eine Klinkenverbindung (51) in einer Öffnung des Leiterstreifens (22).

12. Gerät nach Anspruch 10 oder 11, wobei das Schalten des/der induktiven Elemente(s) (Lp1, Lp2) von der Verwendung oder Nichtverwendung des/der USB-Stecker(s) (51, 53) abhängt.

13. Verfahren zur Steuerung einer Antenne eines tragbaren Geräts nach einem der Ansprüche 9 bis 12, aufweisend einen Schritt des Umschaltens des/der ersten induktiven Elements/Elemente (Lp1, Lp2) in Abhängigkeit von der Aktivierung einer Komponente (51, 53, 55) des Geräts, unabhängig von der Antenne (2).

14. Verfahren nach Anspruch 13, ferner aufweisend einen Schritt zum Einstellen der Kapazität des kapazitiven Elements (28) in Abhängigkeit von der Aktivierung einer Komponente (51, 53, 55) des Geräts, unabhängig von der Antenne (2).

15. Verfahren nach Anspruch 13 oder 14, ferner aufweisend einen Schritt des Einstellens der Kapazität des kapazitiven Elements (28) und/oder einen Schritt des Umschaltens des/der ersten induktiven Elements/Elemente (Lp1, Lp2) in Abhängigkeit von dem für die Antenne gewünschten Frequenzband.

## Claims

1. Antenna including:
an elongated conductive strip (22);
an antenna plug (24) connected to the conductive strip (22);
at least one capacitive element (28) of adjustable capacity connecting, from a first point (66), said strip to ground;
at least one first inductive element (23) coupling the conductive strip (22) to ground from a second point (64); and
at least one second inductive element (Lp1, Lp2) switchable (K1, K2) in parallel with the first capacitive element (28),
the capacitive element (28) and the first inductive element(s) (Lp1, Lp2) being connected out of a portion of the conductive strip (22).

2. Antenna according to claim 1, including at least two individually switchable first inductive elements (Lp1, Lp2) in parallel with the capacitive element (28).

3. Antenna according to claim 2, including a controllable switch (K1, K2) in series with said or each first inductive element (Lp1, Lp2).

4. Antenna of claims 2 and 3, wherein two switches (K1, K2) respectively associated with two first inductive elements (Lp1, Lp2) are controllable according to four states:
the two switches (K1, K2) are off;
a first one (K1) of the switches is on, the second switch (K2) being off;
the second switch (K2) is on, the first switch (K1) being off; and
the two switches (K1, K2) are on.

5. Antenna according to any one of claims 1 to 4, wherein the connection between the capacitive element (28) and the first inductive element(s) (Lp1, Lp2) is direct.

6. Antenna according to any one of claims 1 to 5, wherein the inductance value of the or each first inductive element (Lp1, Lp2) is at least 5 nH, preferably at least 10 nH.

7. Antenna (2) according to any one of claims 1 to 6, forming a shorted quarter-wave antenna.

8. Antenna (2) according to any one of claims 1 to 7, sized for bandwidths in the range from approximately 610 MHz to approximately 960 MHz.

9. Portable telecommunication device including at least one antenna (2) according to any one of claims 1 to 8.

10. Device according to claim 9, including a USB connector (53) in an opening of the conductive strip (22).

11. Device according to claim 9 or 10, including a jack connector (51) in an opening of the conductive strip (22).

12. Device according to claim 10 or 11, wherein the switching of the inductive element(s) (Lp1, Lp2) depends on the use or not of the USB connector(s) (51, 53).

13. Method of controlling an antenna of a portable device according to any one of claims 9 to 12, including a step of switching the first inductive element(s) (Lp1, Lp2) according to the activation of a component (51, 53, 55) of the device, independent from the antenna (2).

14. Method according to claim 13, further including a step of adjusting the capacitance of the capacitive element (28) according to the activation of a component (51, 53, 55) of the device, independent from the antenna (2).

15. Method according to claim 13 or 14, further including a step of adjusting the capacitance of the capacitive element (28) and/or a step of switching the first inductive element(s) (Lp1, Lp2) according to the frequency band desired for the antenna.
